# EUROPEAN PATENT SPECIFICATION

(11) **EP 2 455 232 B1**
(45) Date of publication and mention of the grant of the patent: **21.08.2013**
(21) Application number: 11189221.2
(22) Date of filing: 15.11.2011
(51) Int. Cl.: B60C 1/00, C08C 19/20, C08C 19/22, C08C 19/25, C08L 9/06

(54) **Rubber composition and pneumatic tire**
Kautschukzusammensetzung und Luftreifen
Composition de caoutchouc et pneu

(30) Priority: 17.11.2010 US 948120
(43) Date of publication of application: 23.05.2012
(73) Proprietor: The Goodyear Tire & Rubber Company, Akron, OH 44316-0001 (US)
(72) Inventor: Kanz, Carlo, L-8249 Mamer (LU); Kaes, Christian, L-9184 Schrondweiler (LU); Pagliarini, Olivio Jean-Baptiste, L-6212 Consdorf (LU); Weydert, Marc, L-8020 Strassen (LU); Frank, Uwe Ernst, D-54329 Konz (DE)
(74) Representative: Kutsch, Bernd

(56) References cited:
- EP-A1- 0 575 801
- EP-A1- 1 388 567
- EP-A1- 1 400 560
- EP-A1- 1 431 075
- EP-A1- 1 514 900
- EP-A1- 1 902 865
- EP-A1- 1 911 797
- EP-A1- 2 179 865

## Description

### Background

It is highly desirable for tires to have good wet skid resistance, low rolling resistance, and good wear characteristics. It has traditionally been very difficult to improve a tire's wear characteristics without sacrificing its wet skid resistance and traction characteristics. These properties depend, to a great extent, on the dynamic viscoelastic properties of the rubbers utilized in making the tire.

In order to reduce the rolling resistance and to improve the treadwear characteristics of tires, rubbers having a high rebound have traditionally been utilized in making tire tread rubber compounds. On the other hand, in order to increase the wet skid resistance of a tire, rubbers which undergo a large energy loss have generally been utilized in the tire's tread. In order to balance these two viscoelastically inconsistent properties, mixtures of various types of synthetic and natural rubber are normally utilized in tire treads.

Various additives may also be incorporated into the rubber composition to reduce rolling resistance. However, there is a continuing need to reduce rolling resistance in an effort to reduce fuel consumption.

### Summary

The invention relates to a rubber composition in accordance with claim 1 and to a pneumatic tire in accordance with claim 10.

Dependent claims refer to preferred embodiments of the invention.

In a preferred aspect of the invention, the present invention is directed to a pneumatic tire comprising at least one component, the at least one component comprising a rubber composition, the rubber composition comprising:
from 70 to 90 phr of a styrene-butadiene rubber functionalized with an alkoxysilane group and at least one of a primary amine group and thiol group;
from 10 to 30 phr of at least one additional diene based elastomer;
from 60 to 100 phr of precipitated silica;
from 1 to 10 phr of a polyoctenamer;
from 5 to 25 phr of a starch/plasticizer composite; and
from 10 to 20 phr of a tackifying resin.

### Description

There is disclosed a pneumatic tire comprising at least one component, the at least one component comprising a rubber composition, the rubber composition comprising:
from 70 to 90 phr of a styrene-butadiene rubber functionalized with an alkoxysilane group and at least one of a primary amine group and thiol group;
from 10 to 30 phr of at least one additional diene based elastomer;
from 60 to 100 phr of preferably precipitated silica;
from 1 to 10 phr of a polyoctenamer;
from 5 to 25 phr of a starch/plasticizer composite; and
from 10 to 20 phr of a tackifying resin.

Preferably, the rubber composition of a primary tread cap zones includes a styrene-butadiene rubber functionalized with an alkoxysilane group and at least one of a primary amine group and thiol group. In one embodiment, the styrene-butadiene rubber is obtained by copolymerizing styrene and butadiene, and characterized in that the styrene-butadiene rubber has a primary amino group and/or thiol group and an alkoxysilyl group which are bonded to the polymer chain. In one embodiment, the alkoxysilyl group may be at least one of methoxysilyl group and ethoxysilyl group.

The primary amino group and/or thiol group may be bonded to any of a polymerization initiating terminal, a polymerization terminating terminal, a main chain of the styrene-butadiene rubber and a side chain, as long as it is bonded to the styrene-butadiene rubber chain. However, the primary amino group and/or thiol group is preferably introduced to the polymerization initiating terminal or the polymerization terminating terminal, in that the disappearance of energy at a polymer terminal is inhibited to improve hysteresis loss characteristics.

Further, the content of the alkoxysilyl group bonded to the polymer chain of the (co)polymer rubber is preferably from 0.5 to 200 mmol/kg of (styrene-butadiene rubber. The content is more preferably from 1 to 100 mmol/kg of styrene-butadiene rubber, and particularly preferably from 2 to 50 mmol/kg of styrene-butadiene rubber.

The alkoxysilyl group may be bonded to any of the polymerization initiating terminal, the polymerization terminating terminal, the main chain of the (co)polymer and the side chain, as long as it is bonded to the (co)polymer chain. However, the alkoxysilyl group is preferably introduced to the polymerization initiating terminal or the polymerization terminating terminal, in that the disappearance of energy is inhibited from the (co)polymer terminal to be able to improve hysteresis loss characteristics.

The styrene-butadiene rubber can be produced by polymerizing styrene and butadiene in a hydrocarbon solvent by anionic polymerization using an organic alkali metal and/or an organic alkali earth metal as an initiator, adding a terminating agent compound having a primary amino group protected with a protective group and/or a thiol group protected with a protecting group and an alkoxysilyl group to react it with a living polymer chain terminal at the time when the polymerization has substantially completed, and then conducting deblocking, for example, by hydrolysis or other appropriate procedure. In one embodiment, the styrene-butadiene rubber can be produced as disclosed in US-B- 7,342,070. In another embodiment, the styrene-butadiene rubber can be produced as disclosed in WO-A- 2007/047943.

In one embodiment, and as taught in US-B- 7,342,070, the styrene-butadiene rubber is of the formula (I) or (II) 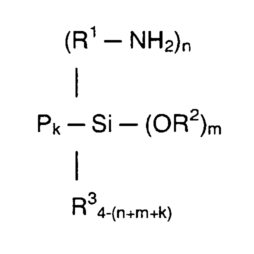 wherein P is a (co)polymer chain of a conjugated diolefin or a conjugated diolefin and an aromatic vinyl compound, R¹ is an alkylene group having 1 to 12 carbon atoms, R² and R³ are each independently an alkyl group having 1 to 20 carbon atoms, an allyl group or an aryl group, n is an integer of 1 or 2, m is an integer of 1 or 2, and k is an integer of 1 or 2, with the proviso that n+m+k is an integer of 3 or 4, 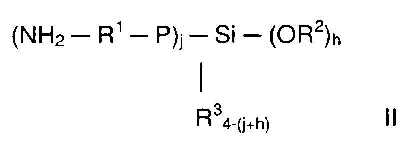 wherein P, R¹, R² and R³ have the same definitions as give for the above-mentioned formula I, j is an integer of 1 to 3, and h is an integer of 1 to 3, with the provision that j+h is an integer of 2 to 4.

The terminating agent compound having a protected primary amino group and an alkoxysilyl group may be any of various compounds as are known in the art. In one embodiment, the compound having a protected primary amino group and an alkoxysilyl group may include, for example, N,N-bis(trimethylsilyl)aminopropylmethyldimethoxysilane, 1-trimethylsilyl-2,2-dimethoxy-1-aza-2-silacyclopentane, N,N-bis(trimethylsilyl)aminopropyltrimethoxysilane, N,N-bis(trimethylsilyl)aminopropyltriethoxysilane, N,N-bis(trimethylsilyl)a minopropylmethyldiethoxysilane, N,N-bis(trimethylsilyl)aminoethyltrimethoxysilane, N,N-bis(trimethylsilyl)-aminoethyltriethoxysilne, N,N-bis(trimethylsilyl)aminoethylmethyldimethoxysilane, N,N-bis(trimethylsilyl)aminoethylmethyldiethoxysilane, etc., and preferred are 1-trimethylsilyl-2,2-dimethoxy-1-aza-2-silacyclopentane, N,N-bis(trimethylsilyl) aminopropylmethyldimethoxysilane and N,N-bis(trimethylsilyl)aminopropylmethyldiethoxysilane. In one embodiment, the compound having a protected primary amino group and an alkoxysilyl group is N,N-bis(trimethylsilyl)aminopropyltriethoxysilane.

In one embodiment, the compound having a protected primary amino group and an alkoxysilyl group may be any compound of formula III

RN-(CH₂)ₓSi(OR^{'})₃, III

wherein R in combination with the nitrogen (N) atom is a protected amine group which upon appropriate post-treatment yields a primary amine, R^{'} represents a group having 1 to 18 carbon atoms selected from an alkyl, a cycloalkyl, an allyl, or an aryl; and X is an integer from 1 to 20. In one embodiment, at least one R^{'} group is an ethyl radical. By appropriate post-treatment to yield a primary amine, it is meant that subsequent to reaction of the living polymer with the compound having a protected primary amino group and an alkoxysilyl group, the protecting groups are removed. For example, in the case of bis(trialkylsilyl) protecting group as in N,N-bis(trimethylsilyl)aminopropyltriethoxysilane, hydrolysis is used to remove the trialkylsilyl groups and leave the primary amine.

In one embodiment, the rubber composition includes from about 70 to about 90 phr of styrene-butadiene rubber functionalized with an alkoxysilane group and a primary amine group or thiol group.

Suitable styrene-butadiene rubbers functionalized with an alkoxysilane group and a primary amine group are available commercially, such as HPR 355 from Japan Synthetic Rubber (JSR).

In one embodiment, the solution polymerized styrene-butadiene rubber is as disclosed in WO-A- 2007/047943 and is functionalized with an alkoxysilane group and a thiol, and comprises the reaction product of a living anionic polymer and a silane-sulfide modifier represented by the formula IV

(R⁴O)ₓR⁴_{y}Si-R⁵-S-SiR⁴₃ IV

wherein Si is silicon; S is sulfur; O is oxygen; x is an integer selected from 1, 2 and 3;y is an integer selected from 0, 1, and 2; x+y=3; R⁴ is the same or different and is (C₁-C₁₆) alkyl; and R' is aryl, or alkyl aryl, or (C₁-C₁₆) alkyl. In one embodiment, R⁵ is a (C₁-C₁₆) alkyl. In one embodiment, each R⁴ group is the same or different, and each is independently a C₁-C₅ alkyl, and R⁵ is C₁-C₅ alkyl.

Suitable styrene-butadiene rubbers functionalized with an alkoxysilane group and a thiol group are available commercially, such as SE SLR 4602 from Styron.

The rubber composition also includes a polyoctenamer. Suitable polyoctenamer may include cyclic or linear macromolecules based on cyclooctene, or a mixture of such cyclic and linear macromolecules. Suitable polyoctenamer is commercially available as Vestenamer 8012 or V6213 from Degussa AG High Performance Polymers. Vestenamer is a polyoctenamer produced in a methathesis reaction of cyclooctene. In one embodiment, the octenamer may have a weight averaged molecular weight of 90,000 to 110,000; a glass transition temperature of from -65 °C to -75 °C; a crystalline content of from 10 to 30 percent by weight; a melting point of from 36 °C to 54 °C; a thermal decomposition temperature of from 250 °C to 275 °C; a cis/trans ratio of double bonds of from 20:80 to 40:60; and Mooney viscosity ML 1+4 of less than 10.

In one embodiment, polyoctenamer is added in an amount ranging from 1 to 40 percent by weight of the total rubber or elastomer used in the rubber composition, or 1 to 10 phr (parts per hundred rubber). Alternatively, from 2 phr to 7 phr polyoctenamer is added to the rubber composition.

The rubber composition also includes from 5 to 25 phr of a starch/synthetic plasticizer composite.

In one embodiment, the starch/synthetic plasticizer composite may be composed of amylose units and amylopectin units in a ratio of 15/85 to 35/65, alternatively 20/80 to 30/70, and has a softening point according to ASTM No. D1228 in a range of 180°C to 220°C; and the starch/plasticizer has a softening point in a range of 110°C to 170°C according to ASTM No. D1228.

The starch/plasticizer composite may be desired to be used, for example, as a free flowing, dry powder or in a free flowing, dry pelletized form. In practice, it is desired that the synthetic plasticizer itself is compatible with the starch, and has a softening point lower than the softening point of the starch so that it causes the softening of the blend of the plasticizer and the starch to be lower than that of the starch alone. This phenomenon of blends of compatible polymers of differing softening points having a softening point lower than the highest softening point of the individual polymer(s) in the blend is well known to those having skill in such art.

The plasticizer effect for the starch/plasticizer composite, (meaning a softening point of the composite being lower than the softening point of the starch), can be obtained through use of a polymeric plasticizer such as, for example, poly(ethylenevinyl alcohol) with a softening point of less than 160°C. Other plasticizers, and their mixtures, are contemplated for use in this invention, provided that they have softening points of less than the softening point of the starch, and preferably less than 160°C, which might be, for example, one or more copolymers and hydrolyzed copolymers thereof selected from ethylene-vinyl acetate copolymers having a vinyl acetate molar content of from 5 to 90, alternatively 20 to 70, percent, ethylene-glycidal acrylate copolymers and ethylene-maleic anhydride copolymers. Hydrolysed forms of copolymers are also contemplated. For example, the corresponding ethylene-vinyl alcohol copolymers, and ethylene-acetate vinyl alcohol terpolymers may be contemplated so long as they have a softening point lower than that of the starch and preferably lower than 160°C.

In general, the blending of the starch and plasticizer involves what are considered or believed herein to be relatively strong chemical and/or physical interactions between the starch and the plasticizer.

In general, the starch/plasticizer composite has a desired starch to plasticizer weight ratio in a range of 0.5/1 to 4/1, alternatively 1/1 to 3/1, so long as the starch/plasticizer composition has the required softening point range, and preferably, is capable of being a free flowing, dry powder or extruded pellets, before it is mixed with the elastomer(s).

While the synthetic plasticizer(s) may have a viscous nature at room temperature, or at 23°C and, thus, considered to be a liquid for the purposes of this description, although the plasticizer may actually be a viscous liquid at room temperature since it is to be appreciated that many plasticizers are polymeric in nature.

Representative examples of synthetic plasticizers are, for example, poly(ethylenevinyl alcohol), cellulose acetate and diesters of dibasic organic acids, so long as they have a softening point sufficiently below the softening point of the starch with which they are being combined so that the starch/plasticizer composite has the required softening point range.

Preferably, the synthetic plasticizer is selected from at least one of poly(ethylenevinyl alcohol) and cellulose acetate.

For example, the aforesaid poly(ethylenevinyl alcohol) might be prepared by polymerizing vinyl acetate to form a poly(vinylacetate) which is then hydrolyzed (acid or base catalyzed) to form the poly(ethylenevinyl alcohol). Such reaction of vinyl acetate and hydrolyzing of the resulting product is well known those skilled in such art.

For example, vinylalcohol/ethylene (60/40 mole ratio) copolymers can be obtained in powder forms at different molecular weights and crystallinities such as, for example, a molecular weight of about 11700 with an average particle size of about 11.5 microns or a molecular weight (weight average) of about 60,000 with an average particle diameter of less than 50 microns.

Various blends of starch and ethylenevinyl alcohol copolymers can then be prepared according to mixing procedures well known to those having skill in such art. For example, a procedure might be utilized according to a recitation in the patent publication by Bastioli, Bellotti and Del Trediu entitled, Polymer Composition Including Destructured Starch and An Ethylene Copolymer, US-B- 5,409,973.

Other plasticizers might be prepared, for example and so long as they have the appropriate Tg and starch compatibility requirements, by reacting one or more appropriate organic dibasic acids with aliphatic or aromatic diol(s) in a reaction which might sometimes be referred to as an "esterification condensation reaction."

The starch is recited as being composed of amylose units and/or amylopectin units. These are well known components of starch. Typically, the starch is composed of a combination of the amylose and amylopectin units in a ratio of about 25/75. A somewhat broader range of ratios of amylose to amylopectin units is recited herein in order to provide a starch for the starch composite which interact with the plasticizer somewhat differently. For example, it is considered herein that suitable ratios may be from 20/80 up to 100/0, although a more suitable range is considered to be 15/85 to 35/63.

The starch can typically be obtained from naturally occurring plants. The starch/plasticizer composition can be present in various particulate forms such as, for example, fibrils, spheres or macromolecules, which may, in one aspect, depend somewhat upon the ratio of amylose to amylopectin in the starch as well as the plasticizer content in the composite.

The relative importance, if any, of such forms of the starch is the difference in their reinforcing associated with the filler morphology. The morphology of the filler primarily determines the final shape of the starch composite within the elastomer composition, in addition, the severity of the mixing conditions such as high shear and elevated temperature can allow to optimize the final filler morphology. Thus, the starch composite, after mixing, may be in a shape of one or more of hereinbefore described forms.

It is important to appreciate that the starch, by itself, is hydrophilic in nature, meaning that it has a strong tendency to bind or absorb water. Thus, the moisture content for the starch and/or starch composite has been previously discussed herein. This is considered to be an important, or desirable, feature in the practice of this invention because water can also act somewhat as a plasticizer with the starch and which can sometimes associate with the plasticizer itself for the starch composite such as polyvinyl alcohol and cellulose acetate, or other plasticizer which contain similar functionalities such as esters of polyvinyl alcohol and/or cellulose acetate or any plasticizer which can depress the melting point of the starch.

Various grades of the starch/plasticizer composition can be developed to be used with various elastomer compositions and processing conditions.

The starch typically has a softening point in a range of 180°C to 220°C, depending somewhat upon its ratio of amylose to amylopectin units, as well as other factors and, thus, does not readily soften when the rubber is conventionally mixed, for example, at a temperature in a range of 140°C to 165°C. Accordingly, after the rubber is mixed, the starch remains in a solid particulate form, although it may become somewhat elongated under the higher shear forces generated while the rubber is being mixed with its compounding ingredients. Thus, the starch remains largely incompatible with the rubber and is typically present in the rubber composition in individual domains.

However, it is now considered herein that providing starch in a form of a starch composite of starch and a plasticizer is particularly beneficial in providing such a composition with a softening point in a range of 110°C to 160°C.

The plasticizers can typically be combined with the starch such as, for example, by appropriate physical mixing processes, particularly mixing processes that provide adequate shear force.

The combination of starch and, for example, polyvinyl alcohol or cellulose acetate, is referred to herein as a "composite". Although the exact mechanism may not be completely understood, it is believed that the combination is not a simple mixture but is a result of chemical and/or physical interactions. It is believed that the interactions lead to a configuration where the starch molecules interact via the amylose with the vinyl alcohol, for example, of the plasticizer molecule to form complexes, involving perhaps chain entanglements. The large individual amylose molecules are believed to be interconnected at several points per molecule with the individual amylopectine molecules as a result of hydrogen bonding (which might otherwise also be in the nature of hydrophilic interactions). In some embodiments, the composite of starch and plasticizer may be referred to as a copolymer of starch and plasticizer.

This is considered herein to be beneficial because by varying the content and/or ratios of natural and synthetic components of the starch composite it is believed to be possible to alter the balance between hydrophobic and hydrophilic interactions between the starch components and the plasticizer to allow, for example, the starch composite filler to vary in form from spherical particles to fibrils.

In particular, it is considered herein that adding a polyvinyl alcohol to the starch to form a composite thereof, particularly when the polyvinyl alcohol has a softening point in a range of 90°C to 130°C, can be beneficial to provide resulting starch/plasticizer composite having a softening point in a range of 110°C to 160°C, and thereby provide a starch composite for blending well with a rubber composition during its mixing stage at a temperature, for example, in a range of 110°C to 165°C or 170°C.

Historically, the more homogeneous the dispersion of rubber compound components into the rubber, the better the resultant cured properties of that rubber. It is considered herein that it is a particular feature of this invention that the starch composite mixes with the rubber composition during the rubber mixing under high shear conditions and at a temperature in a range of 140°C to 165°C, in a manner that very good dispersion in the rubber mixture is obtained. This is considered herein to be important because upon mixing the elastomer composition containing the starch/plasticizer composite to a temperature to reach the melting point temperature of the composite, the starch composite will contribute to the development of high shearing forces which is considered to be beneficial to ingredient dispersion within the rubber composition. Above the melting point of the starch composite, for example, 150°C, it will melt and maximize its reaction with the coupling agent.

Suitable starch/plasticizer composite is available commercially as Mater-Bi® 2030/2040 from Novamont.

The rubber composition includes 10 to 20 phr of a resin selected from the group consisting of hydrocarbon resins, phenol/acetylene resins, rosin derived resins and mixtures thereof.

Representative hydrocarbon resins include coumarone-indene-resins, petroleum resins, terpene polymers and mixtures thereof.

Coumarone-indene resins are commercially available in many forms with melting points ranging from 10 to 160°C (as measured by the ball-and-ring method). Preferably, the melting point ranges from 30 to 100°C. Coumarone-indene resins are well known. Various analysis indicate that such resins are largely polyindene; however, typically contain random polymeric units derived from methyl indene, coumarone, methyl coumarone, styrene and methyl styrene.

Petroleum resins are commercially available with softening points ranging from 10°C to 120 °C. Preferably, the softening point ranges from 30 to 100°C. Suitable petroleum resins include both aromatic and nonaromatic types. Several types of petroleum resins are available. Some resins have a low degree of unsaturation and high aromatic content, whereas some are highly unsaturated and yet some contain no aromatic structure at all. Differences in the resins are largely due to the olefins in the feedstock from which the resins are derived. Conventional derivatives in such resins include dicyclopentadiene, cyclopentadiene, their dimers and diolefins such as isoprene and piperylene.

Terpene polymers are commercially produced from polymerizing a mixture of beta pinene in mineral spirits. The resin is usually supplied in a variety of melting points ranging from 10°C to 135°C.

Phenol/acetylene resins may be used. Phenol/acetylene resins may be derived by the addition of acetylene to butyl phenol in the presence of zinc naphthlate. Additional examples are derived from alkylphenol and acetylene.

Resins derived from rosin and derivatives may be used in the present invention. Gum and wood rosin have much the same composition, although the amount of the various isomers may vary. They typically contain about 10 percent by weight neutral materials, 53 percent by weight resin acids containing two double bonds, 13 percent by weight of resin acids containing one double bond, 16 percent by weight of completely saturated resin acids and 2 percent of dehydroabietic acid which contains an aromatic ring but no unsaturation. There are also present about 6 percent of oxidized acids. Representative of the diunsaturated acids include abietic acid, levopimaric acid and neoabietic acid. Representative of the monounsaturated acids include dextroplmaris acid and dihydroabietic acid. A representative saturated rosin acid is tetrahydroabietic acid.

The rubber composition includes from 10 to 30 phr of at least one additional diene based rubber. Representative synthetic polymers are the homopolymerization products of butadiene and its homologues and derivatives, for example, methylbutadiene, dimethylbutadiene and pentadiene as well as copolymers such as those formed from butadiene or its homologues or derivatives with other unsaturated monomers. Among the latter are acetylenes, for example, vinyl acetylene; olefins, for example, isobutylene, which copolymerizes with isoprene to form butyl rubber; vinyl compounds, for example, acrylic acid, acrylonitrile (which polymerize with butadiene to form NBR), methacrylic acid and styrene, the latter compound polymerizing with butadiene to form SBR, as well as vinyl esters and various unsaturated aldehydes, ketones and ethers, e.g., acrolein, methyl isopropenyl ketone and vinylethyl ether. Specific examples of synthetic rubbers include neoprene (polychloroprene), polybutadiene (including cis-1,4-polybutadiene), polyisoprene (including cis-1,4-polyisoprene), butyl rubber, halobutyl rubber such as chlorobutyl rubber or bromobutyl rubber, styrene/isoprene/butadiene rubber, copolymers of 1,3-butadiene or isoprene with monomers such as styrene, acrylonitrile and methyl methacrylate, as well as ethylene/propylene terpolymers, also known as ethylene/propylene/diene monomer (EPDM), and in particular, ethylene/propylene/dicyclopentadiene terpolymers. Additional examples of rubbers which may be used include alkoxy-silyl end functionalized solution polymerized polymers (SBR, PBR, IBR and SIBR), silicon-coupled and tin-coupled star-branched polymers. The preferred rubber or elastomers are natural rubber, synthetic polyisoprene, polybutadiene and SBR.

In one aspect of this invention, an emulsion polymerization derived styrene/butadiene (E-SBR) might be used having a relatively conventional styrene content of 20 to 28 percent bound styrene or, for some applications, an E-SBR having a medium to relatively high bound styrene content, namely, a bound styrene content of 30 to 45 percent.

By emulsion polymerization prepared E-SBR, it is meant that styrene and 1,3-butadiene are copolymerized as an aqueous emulsion. The bound styrene content can vary, for example, from 5 to 50 percent. In one aspect, the E-SBR may also contain acrylonitrile to form a terpolymer rubber, as E-SBAR, in amounts, for example, of 2 to 30 weight percent bound acrylonitrile in the terpolymer.

Emulsion polymerization prepared styrene/butadiene/acrylonitrile copolymer rubbers containing 2 to 40 weight percent bound acrylonitrile in the copolymer are also contemplated as diene based rubbers for use in this invention.

The solution polymerization prepared SBR (S-SBR) typically has a bound styrene content in a range of 5 to 50, preferably 9 to 36, percent. The S-SBR can be conveniently prepared, for example, by organo lithium catalyzation in the presence of an organic hydrocarbon solvent.

In one embodiment, cis 1,4-polybutadiene rubber (BR) may be used. Such BR can be prepared, for example, by organic solution polymerization of 1,3-butadiene. The BR may be conveniently characterized, for example, by having at least a 90 percent cis 1,4-content.

In one embodiment, cis 1,4-polybutadiene rubber (BR) is used. Suitable polybutadiene rubbers may be prepared, for example, by organic solution polymerization of 1,3-butadiene. The BR may be conveniently characterized, for example, by having at least a 90 percent cis 1,4-content and a glass transition temperature Tg in a range of from -95 to -105 ºC. Suitable polybutadiene rubbers are available commercially, such as Budene® 1207 from Goodyear.

In one embodiment, a synthetic or natural polyisoprene rubber may be used.

A reference to glass transition temperature, or Tg, of an elastomer or elastomer composition, where referred to herein, represents the glass transition temperature(s) of the respective elastomer or elastomer composition in its uncured state or possibly a cured state in a case of an elastomer composition. A Tg can be suitably determined as a peak midpoint by a differential scanning calorimeter (DSC) at a temperature rate of increase of 10ºC per minute.

The term "phr" as used herein, and according to conventional practice, refers to "parts by weight of a respective material per 100 parts by weight of rubber, or elastomer."

The rubber composition may also include up to 70 phr of processing oil. Processing oil may be included in the rubber composition as extending oil typically used to extend elastomers. Processing oil may also be included in the rubber composition by addition of the oil directly during rubber compounding. The processing oil used may include both extending oil present in the elastomers, and process oil added during compounding. Suitable process oils include various oils as are known in the art, including aromatic, paraffinic, naphthenic, vegetable oils, and low PCA oils, such as MES, TDAE, SRAE and heavy naphthenic oils. Suitable low PCA oils include those having a polycyclic aromatic content of less than 3 percent by weight as determined by the IP346 method. Procedures for the IP346 method may be found in Standard Methods for Analysis & Testing of Petroleum and Related Products and British Standard 2000 Parts, 2003, 62nd edition, published by the Institute of Petroleum, United Kingdom.

The rubber composition may include from 60 to 100 phr of silica.

Various commercially available silicas may be used, such as, only for example herein, silicas commercially available from PPG Industries under the Hi-Sil trademark with designations 210, or 243; silicas available from Rhodia, with, for example, designations of 200MP, Z1165MP and Z165GR and silicas available from Degussa AG with, for example, designations VN2 and VN3. Suitable silica may also be produced following the methods of US-A- 2005/0032965.

Commonly employed carbon blacks can be used as a conventional filler in an amount ranging from 10 to 150 phr. Representative examples of such carbon blacks include N110, N121, N134, N220, N231, N234, N242, N293, N299, N315, N326, N330, N332, N339, N343, N347, N351, N358, N375, N539, N550, N582, N630, N642, N650, N683, N754, N762, N765, N774, N787, N907, N908, N990 and N991. These carbon blacks have iodine absorptions ranging from 9 to 145 g/kg and DBP number ranging from 34 to 150 cm³/100 g.

In one embodiment the rubber composition may contain a conventional sulfur containing organosilicon compound. Examples of suitable sulfur containing organosilicon compounds are of the formula:

Z—Alk—Sₙ—Alk—Z V

in which Z is selected from the group consisting of 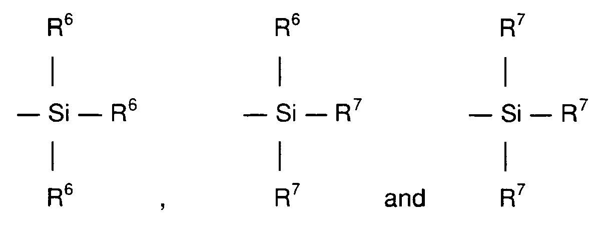 where R⁶ is an alkyl group of 1 to 4 carbon atoms, cyclohexyl or phenyl; R⁷ is alkoxy of 1 to 8 carbon atoms, or cycloalkoxy of 5 to 8 carbon atoms; Alk is a divalent hydrocarbon of 1 to 18 carbon atoms and n is an integer of 2 to 8.

In one embodiment, the sulfur containing organosilicon compounds are the 3,3′-bis(trimethoxy or triethoxy silylpropyl) polysulfides. In one embodiment, the sulfur containing organosilicon compounds are 3,3′-bis(triethoxysilylpropyl) disulfide and/or 3,3′-bis(triethoxysilylpropyl) tetrasulfide. Therefore, as to formula V, Z may be 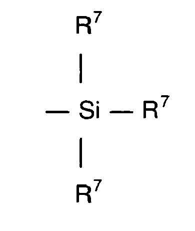 where R⁷ is an alkoxy of 2 to 4 carbon atoms, alternatively 2 carbon atoms; alk is a divalent hydrocarbon of 2 to 4 carbon atoms, alternatively with 3 carbon atoms; and n is an integer of from 2 to 5, alternatively 2 or 4.

In another embodiment, suitable sulfur containing organosilicon compounds include compounds disclosed in US-B- 6,608,125. In one embodiment, the sulfur containing organosilicon compounds includes 3-(octanoylthio)-1-propyltriethoxysilane, CH₃(CH₂)₆C(=O) —S—CH₂CH₂CH₂Si(OCH₂CH₃)₃, which is available commercially as NXT™ from Momentive Performance Materials.

In another embodiment, suitable sulfur containing organosilicon compounds include those disclosed in US-A- 2003/0130535. In one embodiment, the sulfur containing organosilicon compound is Si-363 from Degussa.

The amount of the sulfur containing organosilicon compound in a rubber composition will vary depending on the level of other additives that are used. Generally speaking, the amount of the compound will range from 0.5 to 20 phr. In one embodiment, the amount will range from 1 to 10 phr.

It is readily understood by those having skill in the art that the rubber composition would be compounded by methods generally known in the rubber compounding art, such as mixing the various sulfur-vulcanizable constituent rubbers with various commonly used additive materials such as, for example, sulfur donors, curing aids, such as activators and retarders and processing additives, such as oils, resins including tackifying resins and plasticizers, fillers, pigments, fatty acid, zinc oxide, waxes, antioxidants and antiozonants and peptizing agents. As known to those skilled in the art, depending on the intended use of the sulfur vulcanizable and sulfur-vulcanized material (rubbers), the additives mentioned above are selected and commonly used in conventional amounts. Representative examples of sulfur donors include elemental sulfur (free sulfur), an amine disulfide, polymeric polysulfide and sulfur olefin adducts. In one embodiment, the sulfur-vulcanizing agent is elemental sulfur. The sulfur-vulcanizing agent may be used in an amount ranging from 0.5 to 8 phr, alternatively with a range of from 1.5 to 6 phr. Typical amounts of tackifier resins, if used, comprise 0.5 to 10 phr, usually 1 to 5 phr.

Typical amounts of processing aids comprise 1 to 50 phr. Typical amounts of antioxidants comprise 1 to 5 phr. Representative antioxidants may be, for example, diphenyl-p-phenylenediamine and others, such as, for example, those disclosed in The Vanderbilt Rubber Handbook (1978), Pages 344 through 346. Typical amounts of antiozonants comprise 1 to 5 phr. Typical amounts of fatty acids, if used, which can include stearic acid comprise 0.5 to 3 phr. Typical amounts of waxes comprise 1 to 5 phr. Often microcrystalline waxes are used. Typical amounts of peptizers comprise 0.1 to 1 phr. Typical peptizers may be, for example, pentachlorothiophenol and dibenzamidodiphenyl disulfide.

Accelerators are used to control the time and/or temperature required for vulcanization and to improve the properties of the vulcanizate. In one embodiment, a single accelerator system may be used, i.e., primary accelerator. The primary accelerator(s) may be used in total amounts ranging from 0.5 to 4, alternatively 0.8 to 1.5, phr. In another embodiment, combinations of a primary and a secondary accelerator might be used with the secondary accelerator being used in smaller amounts, such as from 0.05 to 3 phr, in order to activate and to improve the properties of the vulcanizate. Combinations of these accelerators might be expected to produce a synergistic effect on the final properties and are somewhat better than those produced by use of either accelerator alone. In addition, delayed action accelerators may be used which are not affected by normal processing temperatures but produce a satisfactory cure at ordinary vulcanization temperatures. Vulcanization retarders might also be used. Suitable types of accelerators that may be used in the present invention are amines, disulfides, guanidines, thioureas, thiazoles, thiurams, sulfenamides, dithiocarbamates and xanthates. In one embodiment, the primary accelerator is a sulfenamide. If a second accelerator is used, the secondary accelerator may be a guanidine, dithiocarbamate or thiuram compound. Suitable guanidines include dipheynylguanidine and the like. Suitable thiurams include tetramethylthiuram disulfide, tetraethylthiuram disulfide, and tetrabenzylthiuram disulfide.

The mixing of the rubber composition can be accomplished by methods known to those having skill in the rubber mixing art. For example, the ingredients are typically mixed in at least two stages, namely, at least one non-productive stage followed by a productive mix stage. The final curatives including sulfur-vulcanizing agents are typically mixed in the final stage which is conventionally called the "productive" mix stage in which the mixing typically occurs at a temperature, or ultimate temperature, lower than the mix temperature(s) than the preceding non-productive mix stage(s). The rubber composition may be subjected to a thermomechanical mixing step. The thermomechanical mixing step generally comprises a mechanical working in a mixer or extruder for a period of time suitable in order to produce a rubber temperature between 140°C and 190°C. The appropriate duration of the thermomechanical working varies as a function of the operating conditions, and the volume and nature of the components. For example, the thermomechanical working may be from 1 to 20 minutes.

The rubber composition may be incorporated in a variety of rubber components of the tire. For example, the rubber component may be a tread (including tread cap and tread base), sidewall, apex, chafer, sidewall insert, wirecoat or innerliner. In one embodiment, the component is a tread.

The pneumatic tire of the present invention may be a race tire, passenger tire, aircraft tire, agricultural, earthmover, off-the-road or truck tire. In one embodiment, the tire is a passenger or truck tire. The tire may also be a radial or bias.

Vulcanization of the pneumatic tire of the present invention is generally carried out at conventional temperatures ranging from 100°C to 200°C. In one embodiment, the vulcanization is conducted at temperatures ranging from 110°C to 180°C. Any of the usual vulcanization processes may be used such as heating in a press or mold, heating with superheated steam or hot air. Such tires can be built, shaped, molded and cured by various methods which are known and will be readily apparent to those having skill in such art.

The invention is further illustrated by the following example.

### Example 1

In this example, preparation and testing of rubber compositions containing alkylalkoxysilane of formula I and a silicone T resin is illustrated.

Four rubber compound samples were prepared using a three step mixing procedure following the recipes shown in Table 1, with all amounts given in phr.

Samples (for viscoelastic and stress-strain measurements) were cured for ten minutes at 170°C and tested for physical properties as shown in Table 1. Viscoelastic properties were measured using an Eplexor® dynamic mechanical analyzer at 10 Hz and 2% DSA. Stress-strain properties were measured using a Zwick 1445 Universal Testing System (UTS). Cure properties were measured using a Rubber Process Analyzer (RPA) 2000 from Alpha Technologies. References to an RPA 2000 instrument may be found in the following publications: H. A. Palowski, et al, Rubber World, June 1992 and January 1997, as well as Rubber & Plastics News, Apr. 26 and May 10, 1993.

**Table 1**

| Sample No. | 1 | 2 |
|---|---|---|
| Type | inventive | control |
| Non-Productive Mix Step | | |
| Polybutadiene¹ | 20 | 30 |
| Styrene-Butadiene² | 80 | 35 |
| Styrene-Butadiene³ | 0 | 48 |
| Process Oil⁴ | 15 | 19 |
| Silica⁵ | 80 | 0 |
| Silica⁶ | 0 | 90 |
| Carbon Black | 0 | 10 |
| Starch/plasticizer composite⁷ | 10 | 0 |
| Alphamethyl styrene resin | 0 | 5 |
| Terpene resin⁸ | 17 | 0 |
| Polyoctenamer⁹ | 5 | 0 |
| Coupling Agent¹⁰ | 7.8 | 0 |
| Coupling Agent¹¹ | 0 | 6.8 |
| Waxes¹² | 1 | 1 |
| Stearic Acid | 3 | 3 |
| Antidegradant¹³ | 2.5 | 2.5 |
| Productive Mix Step | | |
| Antidegradant¹³ | 0.5 | 0.5 |
| Zinc Oxide | 2.5 | 1.5 |
| Sulfur | 1.4 | 0.7 |
| Accelerators¹⁴ | 5.5 | 3.5 |
| Coupling Agent¹⁵ | 2 | 0 |

| | | |
|---|---|---|
| ¹ High cis polybutadiene, obtained as Budene 1207 from The Goodyear Tire & Rubber Company ² SE SLR 4602, partially tin-coupled, blocked mercapto solution polymerized styrene-butadiene rubber, typical properties reported as 21% bound styrene, 49% vinyl content (on RHC), Tg = -27 °C, Mooney ML 1 +4 (100 C) = 68, from Styron. ³ SE SLR4630 partially silicone coupled, solution polymerized styrene-butadiene rubber extended with 37.5 phr TDAE oil, 25% bound styrene, 47% vinyl content (on RHC), Tg = -28.9°C, Mooney ML 1+4 (100 C) = 55, from Styron. ⁴ TDAE ⁵ Zeosil R Premium 200 MP, synthetic, hydrated, amorphous precipitated high aggregate size HDS silica with a surface area of 210 m²/g, from Rhodia. ⁶ Zeosil 1165 MP, amorphous precipitated high aggregate size HDS silica with a surface area of 160 m²/g, from Rhodia. ⁷ Mater-Bi 2030/2040, a copolymer of starch and ethylene/vinyl-alcohol in the ration 72/28, from Novamont. ⁸ Sylvares R TR B115, a polyterpene resin, Tg= 70 °C, softening point 115 °C, from Arizona Chemical. ⁹ Vestenamer 8012, a metathesis polymerized homopolymer of cyclooctene, a polyoctenamer containing 80/20 trans/cis ratio of double bonds, from Evonik. ¹⁰ bis(triethoxysilylpropyl) disulfide. ¹¹ bis(triethoxysilylpropyl) tetrasulfide. ¹² paraffinic and microcrystalline types ¹³ p-phenylene diamine type ¹⁴ sulfenamide and guanidine types ¹⁵ bis(triethoxysilylpropyl) tetrasulfide on carbon black (50/50 ratio) | | |

**Table 2**

| Sample No. | 1 | 2 |
|---|---|---|
| Stress-Strain Properties (Ring Modulus ASTM D412) | | |
| 100% Modulus, MPa | 2.6 | 2.2 |
| 300% Modulus, MPa | 10.2 | 10.9 |
| Elongation at Break, % | 478 | 415 |
| Tensile Strength, MPa | 15.6 | 14.9 |
| True Tensile | 90 | 77 |
| Shore A | 64 | 67 |
| Zwick Rebound (ASTM D1054. DIN 53512) | | |
| Rebound 23 °C, % | 33 | 34 |
| Rebound 100 °C, % | 63 | 59 |

**Table 3**

| Sample No. | 1 | 2 |
|---|---|---|
| Tire Performance Indices (higher is better) | | |
| Rolling Resistance | 106 | 100 |
| Wet Braking | 100 | 100 |
| Straight Aquaplaning | 100 | 100 |
| Curved Aquaplaning | 102 | 100 |
| Dry Handling | 103 | 100 |
| Dry Braking | 100 | 100 |

As seen by the data of Tables 1, 2 and 3, Sample 1 representing the present invention showed a significant improvement in rolling resistance as indicated by the rebound at 100 °C and tire performance.

## Claims

1. A rubber composition comprising from 70 to 90 phr of a styrene-butadiene rubber functionalized with an alkoxysilane group and at least one of a primary amine group and thiol group; from 10 to 30 phr of at least one additional diene based elastomer; from 60 to 100 phr of silica; from 1 to 10 phr of a polyoctenamer; from 5 to 25 phr of a starch/plasticizer composite; and from 10 to 20 phr of a tackifying resin.

2. The rubber composition of claims 1 wherein the styrene-butadiene rubber functionalized with an alkoxysilane group and at least one of a primary amine group and thiol group is a styrene-butadiene rubber functionalized with an alkoxysilane group and a thiol group.

3. The rubber composition of claims 1 or 2 wherein the styrene-butadiene rubber functionalized with an alkoxysilane group and at least one of a primary amine group and thiol group comprises the reaction product of a living anionic polymer and a silane-sulfide modifier represented by the formula IV
(R⁴O)ₓR⁴_{y}Si-R⁵-S-SiR⁴₃ IV
wherein Si is silicon, S is sulfur, O is oxygen, x is an integer selected from 1, 2 and 3, y is an integer selected from 0, 1, and 2, x+y=3, R⁴ is the same or different and is a (C₁-C₁₆) alkyl, and R⁵ is aryl, an alkyl aryl, or a (C₁-C₁₆) alkyl.

4. The rubber composition of at least one of the previous claims wherein the at least one additional diene based elastomer is selected from the group consisting of styrene-butadiene rubber, polybutadiene, natural rubber, and synthetic polyisoprene.

5. The rubber composition of at least one of the previous claims wherein the at least one additional diene based elastomer is a polybutadiene with at least a 90 percent cis 1,4-content and a glass transition temperature Tg in a range of from -95 to -105ºC.

6. The rubber composition of at least one of the previous claims wherein the tackifying resin is selected from the group consisting of hydrocarbon resins, phenol/acetylene resins, rosin derived resins and mixtures thereof.

7. The rubber composition of at least one of the previous claims wherein the tackifying resin is a terpene resin.

8. The rubber composition of at least one of the previous claims wherein the silica is precipitated silica

9. The rubber composition of at least one of the previous claims wherein the starch/plasticizer composite is a composite of starch and ethylene vinyl alcohol copolymer.

10. A pneumatic tire comprising at least one component, the at least one component comprising a rubber composition in accordance with at least one of the previous claims.

11. The tire of claim 10 wherein the component is selected from the group consisting of tread, tread cap, tread base, sidewall, apex, chafer, sidewall insert, wirecoat or innerliner.

12. The tire of claim 11 wherein the component is a tread.

13. The tire of claim 11 wherein the component is a tread cap.

## Patentansprüche

1. Kautschukzusammensetzung, umfassend 70 bis 90 ThK eines Styrol-Butadien-Kautschuks, der mit einer Alkoxysilangruppe und mindestens einem einer primären Amingruppe und Thiolgruppe funktionalisiert ist; 10 bis 30 ThK mindestens eines zusätzlichen dienbasierten Elastomers; 60 bis 100 ThK Silika, 1 bis 10 ThK eines Polyoctenamers; 5 bis 25 ThK eines Stärke-Weichmacher-Verbundwerkstoffs; und 10 bis 20 ThK eines klebrigmachenden Harzes.

2. Kautschukzusammensetzung nach Anspruch 1, wobei der mit einer Alkoxysilangruppe und mindestens einem einer primären Amingruppe und Thiolgruppe funktionalisierte Styrol-Butadien-Kautschuk ein mit einer Alkoxysilangruppe und einer Thiolgruppe funktionalisierter Styrol-Butadien-Kautschuk ist.

3. Kautschukzusammensetzung nach Ansprüchen 1 oder 2, wobei der mit einer Alkoxysilangruppe und mindestens einem einer primären Amingruppe und Thiolgruppe funktionalisierte Styrol-Butadien-Kautschuk das Reaktionsprodukt eines lebenden anionischen Polymers und eines Silan-Sulfid-Modifikators umfasst, dargestellt durch die Formel IV
(R⁴O)ₓR⁴_{y}Si-R⁵-S-SiR⁴₃ IV
wobei Si Silizium ist, S Schwefel ist, O Sauerstoff ist, x eine ganze Zahl ist, ausgewählt aus 1, 2 und 3; y eine ganze Zahl ist, ausgewählt aus 0, 1 und 2; x+y=3; R⁴ das gleiche oder verschieden ist und ein (C₁-C₁₆)-Alkyl ist, und R⁵ Aryl, ein Alkylaryl oder ein (C₁-C₁₆)-Alkyl ist.

4. Kautschukzusammensetzung nach mindestens einem der vorgenannten Ansprüche, wobei das mindestens eine zusätzliche dienbasierte Elastomer aus der Gruppe ausgewählt ist, bestehend aus Styrol-Butadien-Kautschuk, Polybutadien, Naturkautschuk und synthetischem Polyisopren.

5. Kautschukzusammensetzung nach mindestens einem der vorgenannten Ansprüche, wobei das mindestens eine zusätzliche dienbasierte Elastomer ein Polybutadien mit mindestens einem cis-1,4-Gehalt von 90 Prozent und einer Glasübergangstemperatur Tg in einem Bereich von -95 bis -105°C ist.

6. Kautschukzusammensetzung nach mindestens einem der vorgenannten Ansprüche, wobei das klebrigmachende Harz aus der Gruppe ausgewählt ist, bestehend aus Kohlenwasserstoffharzen, Phenol-/Acetylenharzen, von Kolophonium abgeleiteten Harzen und Mischungen davon.

7. Kautschukzusammensetzung nach mindestens einem der vorgenannten Ansprüche, wobei das klebrigmachende Harz ein Terpenharz ist.

8. Kautschukzusammensetzung nach mindestens einem der vorgenannten Ansprüche, wobei das Silika ausgefälltes Silika ist.

9. Kautschukzusammensetzung nach mindestens einem der vorgenannten Ansprüche, wobei der Stärke-Weichmacher-Verbundwerkstoff ein Verbundwerkstoff von Stärke und Ethylenvinylalkohol-Copolymer ist.

10. Luftreifen, umfassend mindestens ein Bauteil, wobei das mindestens eine Bauteil eine Kautschukzusammensetzung gemäß mindestens einem der vorgenannten Ansprüche umfasst.

11. Reifen nach Anspruch 10, wobei das Bauteil aus der Gruppe ausgewählt ist, bestehend aus Lauffläche, Laufstreifenoberteil, Laufstreifenunterteil, Seitenwand, Kernprofil, Wulstschutzstreifen, Seitenwandeinsatz, Drahtüberzug oder Innenisolierung.

12. Reifen nach Anspruch 11, wobei das Bauteil eine Lauffläche ist.

13. Reifen nach Anspruch 11, wobei das Bauteil ein Laufstreifenoberteil ist.

## Revendications

1. Composition de caoutchouc comprenant à concurrence de 70 à 90 phr, un caoutchouc de styrène-butadiène fonctionnalisé avec un groupe alcoxysilane et au moins une groupe choisi parmi un groupe d'amine primaire et un groupe thiol ; à concurrence de 10 à 30 phr, au moins une élastomère supplémentaire à base diénique ; à concurrence de 60 à 100 phr, de la silice ; à concurrence de 1 à 10 phr, un polyocténamère ; à concurrence de 5 à 25 phr, un composite amidon/plastifiant ; et à concurrence de 10 à 20 phr, une résine qui rend poisseux.

2. Composition de caoutchouc selon la revendication 1, qui comprend le produit réactionnel d'un polymère anionique vivant et d'un modificateur est un caoutchouc de styrène-butadiène fonctionnalisé avec un groupe alcoxysilane et un groupe thiol.

3. Composition de caoutchouc selon la revendication 1 ou 2, dans laquelle le caoutchouc de styrène-butadiène fonctionnalisé avec un groupe alcoxysilane et au moins une groupe choisi parmi un groupe d'amine primaire et un groupe thiol comprend le produit réactionnel d'un polymère anionique vivant et d'un modificateur à base de sulfure de silane répondant à la formule :
(R⁴O)ₓR⁴_{y}Si-R⁵-S-SiR⁴3 IV
dans laquelle Si représente un atome de silicium, S représente un atome de soufre, O représente un atome d'oxygène, x représente un entier choisi parmi 1, 2 et 3, y représente un entier choisi parmi 0, 1 et 2" x + y = 3, R⁴ sont identiques ou différents et représentent un groupe alkyle en C₁-C₁₆, et R⁵ représente un groupe aryle, un groupe alkylaryle ou un groupe alkyle en C₁-C₁₆.

4. Composition de caoutchouc selon au moins une des revendications précédentes, dans laquelle ledit au moins une élastomère supplémentaire à base diénique est choisi parmi le groupe constitué par un caoutchouc de styrène-butadiène, le polybutadiène, du caoutchouc naturel et du polyisoprène synthétique.

5. Composition de caoutchouc selon au moins une des revendications précédentes, dans laquelle ledit au moins une élastomère supplémentaire à base diénique est du polybutadiène possédant une teneur en 1,4-cis à concurrence d'au moins 90 % et une température de transition vitreuse Tg dans la plage de -95 à -105 °C.

6. Composition de caoutchouc selon au moins une des revendications précédentes, dans laquelle la résine qui rend poisseux est choisie parmi le groupe constitué par des résines d'hydrocarbures, des résines de phénol/acétylène, des résines qui dérivent de la colophane, et leurs mélanges.

7. Composition de caoutchouc selon au moins une des revendications précédentes, dans laquelle la résine qui rend poisseux est une résine terpénique.

8. Composition de caoutchouc selon au moins une des revendications précédentes, dans laquelle la silice est de la silice précipitée.

9. Composition de caoutchouc selon au moins une des revendications précédentes, dans laquelle le composite amidon/plastifiant est un composite d'amidon et d'un copolymère d'éthylène et d'alcool vinylique.

10. Bandage pneumatique comprenant au moins une composant, ledit au moins une composant comprenant une composition de caoutchouc selon au moins une des revendications précédentes.

11. Bandage pneumatique selon la revendication 10, dans lequel le composant est choisi parmi le groupe constitué par une bande de roulement, un sommet de bande de roulement, une base de bande de roulement, un flan, un bourrage sur tringle, une bandelette talon, un insert de flanc, un enrobage de fil métallique ou un calandrage intérieur.

12. Bandage pneumatique selon la revendication 11, dans lequel le composant est une bande de roulement.

13. Bandage pneumatique selon la revendication 11, dans lequel le composant est un sommet de bande de roulement.
